# EUROPEAN PATENT SPECIFICATION

(11) **EP 2 845 468 B1**
(45) Date of publication and mention of the grant of the patent: **03.08.2016**
(21) Application number: 14002406.8
(22) Date of filing: 12.07.2014
(51) Int. Cl.: A01J 25/00

(54) **Pasta filata-moulding machine**
Pasta-Filata-Formmaschine
Machine de moulage de pâtes alimentaires

(30) Priority: 09.09.2013 IT TO20130726
(43) Date of publication of application: 11.03.2015
(73) Proprietor: CMT Costruzioni Meccaniche e Tecnologia S.p.A., 12016 Peveragno CN (IT)
(72) Inventor: Tomatis, Stefano, I-12016 Peveragno (CN) (IT)
(74) Representative: Modiano, Micaela Nadia

(56) References cited:
- EP-A1- 0 625 304
- US-A- 5 881 639
- US-A1- 2007 012 197

## Description

The present invention relates to a pasta filata-moulding machine.

In the industrial production of cheese it is known to mould the pasta filata into bars by extrusion.

With a known extruder, the pasta filata is pushed by two counter-rotating augers towards a perforated extrusion wall, from which it comes out in the shape of bars, the diameter of which substantially corresponds to the diameter of the holes in the extrusion wall. The so-obtained bars of pasta filata are then cooled in a consolidation basin filled with cold water.

A conventional extrusion system as above has the drawback that the bars produced may have uneven profiles and diameters, specially in the case of bars which are relatively small in diameter, e.g., in the range 10 to 15 mm. This drawback is due to the fact that the pasta filata is an elastic material which is compressed during the extrusion and, when it comes out from the perforated wall in the shape of bars, it is still subject to internal stresses causing it to expand radially in an uncontrolled manner.

This drawback leads to further negative consequences when the bars are segmented into equal-in-lenght sticks, e.g., by shearing them at equal intervals while they are coming out from the extruder. In fact, in this case, the above-mentioned unevenness in the profile and in the diameter results in considerable differences in weight between the sticks.

Another roll mould is disclosed in US-A-2007/0012197.

Therefore, it is a main object of the present invention to provide a pasta filata-moulding machine which is capable of producing bars having uniform diameters and regular profiles, with considerably improved performances with respect to the conventional extruders.

The above object and other advantages, which will become apparent from the following description, are achieved by the pasta filata-moulding machine having the features recited in claim 1, while the dependent claims state other advantageous, though secondary, features of the invention.

The invention will be now described in more detail, with reference to a preferred, non-exclusive embodiment shown by way of non-limiting example in the attached drawings, wherein:
Fig. 1 is a front view of a pasta filata-moulding machine according to the invention;
Fig. 2 is a view in cross-section of the machine of Fig. 1 made along line II-II;
Fig. 3 is an exploded, perspective view, which isolately shows a moulding head incorporated in the machine of Fig. 1;
Fig. 4 shows the moulding head of Fig. 3 to an enlarged scale in a cross-section as illustrated in Fig. 1;
Fig. 5 is a view in cross-section of Fig. 4 made along line V-V.

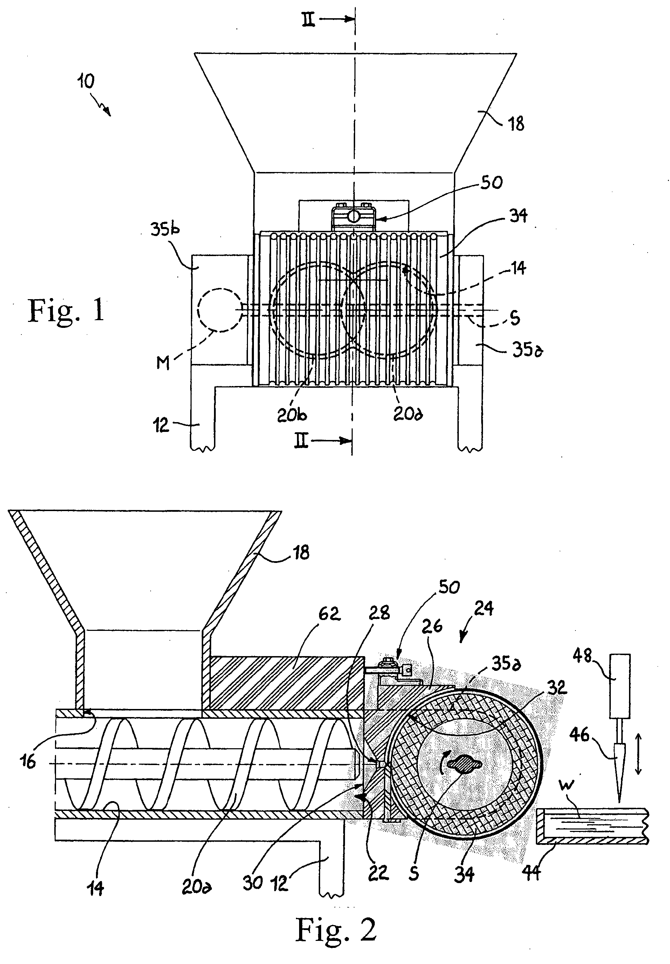

With initial reference to Figs. 1 and 2, a pasta filata-moulding machine 10 comprises a frame 12 supporting a horizontal duct 14 which is provided with an upper loading opening 16 for receiving a mass of pasta filata (not shown) from a hopper 18.

Duct 14 houses a pair of counter-rotating, motorized augers 20a, 20b which are rotatably supported side-by-side. Augers 20a, 20b are operatable to push the pasta filata loaded via hopper 18 towards an outlet 22 of duct 14 which has a moulding head applied thereto, referred to as 24 in its entirety.

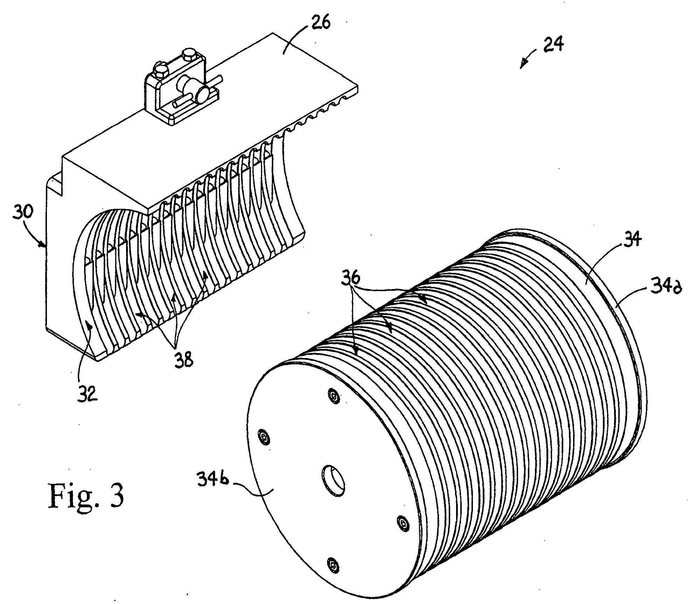

Having now reference to Figs. 3-5, moulding head 24 according to the invention comprises a cylindrical drum 34 having a series of circumferential grooves 36 (Figs. 3-5) on its outer surface. Drum 34 is horizontally supported in front of outlet 22 and is driven to rotate axially by motor means M. A body 26 is arranged between outlet 22 and drum 34, which has a horizontal row of extrusion holes 28. Extrusion holes 28 have respective inlet ends 28a opening to a first surface 30 of the body which is arranged to obstruct outlet 22, and respective outlet ends 28b opening to a second surface 32 of the body at positions aligned to the circumferential grooves 36 on drum 34. The second surface has a concave profile in the shape of a sector of cylinder which is equal in diameter to drum 34, and is arranged adjacent to the latter.

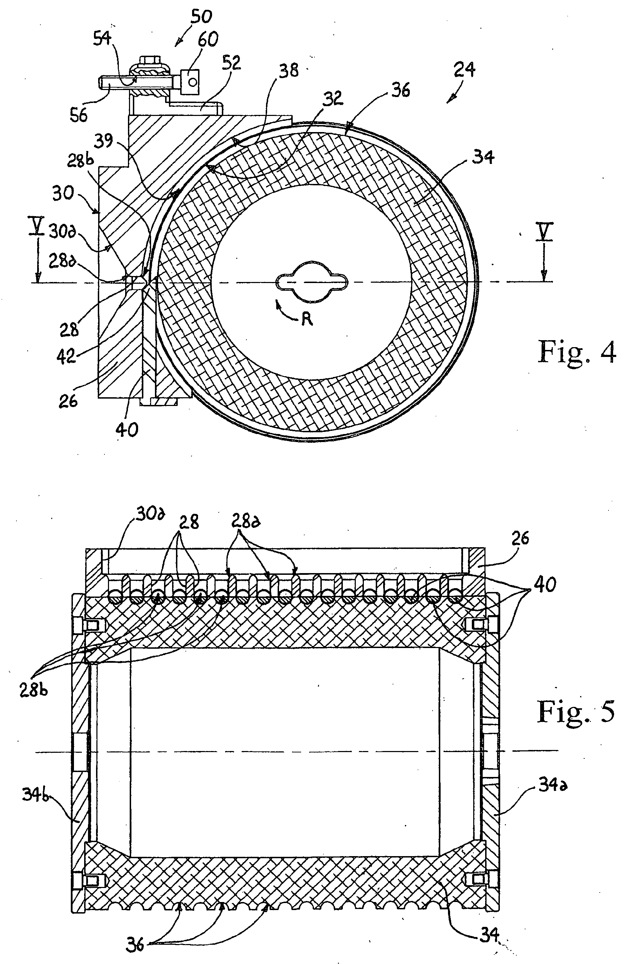

As shown in detail in Figs. 4 and 5, with the embodiment described herein extrusion holes 28 extend between the bottom of a V-shaped, horizontal channel 30a formed on first surface 30 of body 26 and respective circumferential grooves 38 formed on second surface 32 of body 26 at positions aligned to grooves 36 on drum 34.

As shown in Figs. 1 and 2, drum 34 is keyed to a shaft S which is rotatably supported between two arms 35a, 35b integral with frame 12. Shaft S is driven to rotate by motor means M (only diagrammatically shown in Fig. 1) incorporated in one of the arms, 35b.

In the example described herein, drum 34 is hollow and is closed at its opposite ends by two disc-shaped plates 34a, 34b which are centrally bored for the insertion of shaft S.

Circumferential grooves 36 and 38 are shaped in such a way as to define, when coupled, channels 39 (Fig. 4) having a closed profile complementary with the profile desired for the bars of pasta filata. For example, in the embodiment described herein, grooves 36 on drum 34 and grooves 38 on body 26 have counterposed semi-circular profiles. Therefore, the resulting bars of pasta filata will have a cylindrical profile substantially equal in diameter to the grooves. Of course, other rounded or polygonal profiles may be provided.

Having now particular reference to Fig. 4, channels 39, which are defined between grooves 38 of body 26 and grooves 36 of drum 34, are obstructed, immediately upstream of outlet ends 28b of extrusion holes 28 with respect to the direction of rotation of drum 34 (indicated by arrow R in Fig. 4), by respective inserts 40 which are inserted through body 26, in order to prevent the pasta filata coming out from holes 28 to creep between the grooves in the opposite direction to the direction of rotation of drum 34, by effect of the pressure to which it is subject during the extrusion. Inserts 40 have an elongated shape with a guiding end 42 which obliquely faces outlet end 28b of the respective extrusion hole 28 for routing the material coming out of the latter to the right direction.

With particular reference to Figs. 2 and 4, body 26 is biased by a locking mechanism 50 to abut against drum 34, which therefore slidably rotates against body 26. Locking mechanism 50 comprises a support 52 mounted on body 26 and having a threaded hole 54 which is engaged by a screw 56. Screw 56 is provided with a grip 60 at one end, and frontally abuts, with its opposite end, against an abutment 62 integral with duct 14 (Fig. 2).

With particular reference to Fig. 2, a consolidation basin 44 filled with cold water W is conventionally supported downstream of drum 34 to receive -submerged- the bars of pasta filata coming from drum 34.

Advantageously, machine 10 is also provided with shearing means (only diagrammatically shown in Fig. 2) comprising a blade 46, which is arranged transversely with respect to the bars of pasta filata coming from drum 34 and is operated intermittently by an actuator 48 for segmenting the bars into sticks having a predetermined lenght. Preferably, actuator 48 is controlled in such a way as to perform a cut every *n* degrees of rotation of the drum (which, e.g., may be provided with an encoder, not shown, to this purpose), wherein n is chosen based on the desired lenght for the sticks, in such a way as to always obtain sticks having a desired lenght regardless of the speed of rotation of the drum.

Drum 34 is preferably made of aluminum for food, while body 26 is made of a synthetic material. Preferably, circumferential grooves 36 of drum 34 are subject to sandblasting to improve the adhesion of the pasta filata to its surface.

In operation, the pasta filata is loaded into duct 14 via hopper 18. By operating augers 20a, 2b, the pasta filata is pushed against first surface 30 of body 26 with consequent extrusion through holes 28. Simultaneously, drum 34 is rotated in the direction indicated by arrow R in Fig. 4, so that the extruded bars of pasta filata enter circumferential grooves 36 of drum 34 and are carried by the latter for a portion of its rotation.

At this stage the pasta filata, which is sandwiched between body 26 and drum 34, undergoes a moulding action determined by the profile of the grooves, and is free to expand only in the longitudinal direction. To this purpose, concave surface 32 of body 26 advantageously has an angular extent sufficient to contain the pasta filata until it has substantially stopped growing and, therefore, the profile of the bars has consolidated. In this regard, the size of body 26 may be experimentally chosen depending on the phisical properties of the specific pasta filata under processing.

A preferred embodiment of the invention has been described herein, but of course many changes may be made by a person skilled in the art within the scope of the claims. In particular, the circumferential grooves could be formed only on drum 34, while concave surface 32 of body 26 could have a smooth, cylindrical profile; in this case, the bars of pasta filata output from the machine would be flat at the area of contact with body 26. Of course, some components of the machine are to be understood as optional. For instance, for the production of continuous bars of pasta filata to put on the market as clews, the shearing step can be carried out manually. Moreover, any other conventional extrusion system may be used upstream of moulding unit 24.

## Claims

1. A pasta filata-moulding machine, comprising a duct (14) provided with an outlet (22) having a moulding head (24) applied thereto, and pushing means (20a, 20b) operable to push a mass of pasta filata loaded in the duct (14) towards said outlet (22),
wherein said moulding head (24) comprises
- a cylindrical drum (34) which is horizontally supported in front of said outlet (22), is driven to rotate axially by driving means (M), and has a series of circumferential grooves (36) on its outer surface, and
- a body (26), which is interposed between said outlet (22) and said drum (34) and is provided with a series of extrusion holes (28) extending between a first surface (30) of the body, which is arranged to close said outlet (22), and a second surface (32) of the body, which has a concave profile in the shape of a sector of cylinder equal in diameter to said drum (34) and is arranged adjacent to the latter,
said extrusion holes (28) having respective outlet ends (28b) opening to said second surface (32) and aligned to said circumferential grooves (36) on the drum (34), whereby the pasta filata extruded through the extrusion holes (28) is fed into said circumferential grooves (36) and is carried by the drum (34) for a portion of its rotation, thereby receiving a moulding action determined by the opposite profiles of the body (26) and the drum (34).

2. The machine of claim 1, **characterized in that** said second surface (32) of the body (26) also has a series of circumferential grooves (28) aligned to the circumferential grooves (36) on said drum (34), in which said outlet ends (28b) of the extrusion holes (28) are located.

3. The machine of claim 1 or 2, **characterized in that** channels (39) are defined between the circumferential grooves (36) of the drum (34) and the body (26), which are obstructed, immediately upstream of said outlet ends (28b) of the extrusion holes (28) with respect to the direction of rotation of the drum (34), by respective inserts (40) integral with the body (26).

4. The machine of claim 3, **characterized in that** each of said inserts (40) has a guiding end (42) which obliquely faces the outlet end (28b) of the respective extrusion hole (28) for routing the material coming out of the hole in the direction of rotation of the drum (34).

5. The machine of any of claims 1 to 4, **characterized in that** said body (26) is biased to abut against the drum (34), which rotates in sliding relation with respect to the body, by a locking mechanism (50).

6. The machine of claim 5, **characterized in that** said locking mechanism (50) comprises a support (52) fixed to the body (26) and having a threaded hole (54) which is engaged by a screw (56) abutting frontally against an abutment (62) integral with said duct (14).

7. The machine of any of claims 1 to 6, **characterized in that** said second surface (32) of the body (26) has an angular extent, which is sufficient to contain the pasta filata extruded through said extrusion holes (28) until the pasta filata has substantially stopped growing.

8. The machine of any of claims 2 to 7, **characterized in that** said circumferential grooves (36) on the drum (34) and said circumferential grooves (38) on the body (26) have counterposed, semi-circular profiles.

9. The machine of any of claims 1 to 8, **characterized in that** it comprises slicing means (46, 48) adapted to slice the pasta filata delivered by the drum (34) into sticks having a predetermined lenght.

10. The machine of claim 9, **characterized in that** said slicing means comprise a blade (46) arranged at right angles to the feeding direction of the pasta filata delivered by the drum (34) and intermittently driven by an actuator (48) controlled to perform a cut every *n* degrees of rotation of the drum (34), where n is chosen based on the desired lenght for the sticks.

## Patentansprüche

1. Eine Pasta-Filata-Formmaschine, die eine Passage (14) mit einem Auslass (22) umfasst, an dem ein Formkopf (24) angebracht ist, und Schubmittel (20a, 20b) die betätigt werden können, um eine in die Passage (14) geladene Masse von Pasta-Filata zu dem Auslass (22) hin zu schieben,
wobei der Formkopf (24) Folgendes umfasst:
- eine Zylindertrommel (34), die horizontal vor dem Auslass (22) getragen wird, von dem Antriebsmittel (M) angetrieben wird, um sich axial zu drehen, und an ihrer Oberfläche eine Reihe von umlaufenden Umfangsnuten (36) hat, und
- einen Körper (26), der zwischen dem Auslass (22) und der Trommel (34) angeordnet und mit einer Reihe von Extrusionsbohrungen (28) versehen ist, die sich zwischen einer ersten Oberfläche (30) des Körpers, die angeordnet ist, um den Auslass (22) zu verschließen, und einer zweiten Oberfläche (32) des Körpers angeordnet sind, welche ein konkaves Profil in Form eines Zylindersektors hat, das den gleichen Durchmesser wie die Trommel (34) hat und angrenzend an diese angeordnet ist,
wobei die Extrusionsbohrungen (28) entsprechende Auslassenden (28b) haben, die sich zu der zweiten Oberfläche (32) hin öffnen und mit den umlaufenden Umfangsnuten (36) an der Trommel (34) fluchten, wodurch die Pasta-Filata, die durch die Extrusionsbohrungen (28) extrudiert wird, den umlaufenden Umfangsnuten (36) zugeführt und von der Trommel (34) über einen Teil ihrer Drehung transportiert wird, wodurch sie eine Formwirkung empfängt, die von den gegenüberliegenden Profilen des Körpers (26) und der Trommel (34) bestimmt wird.

2. Die Maschine gemäß Anspruch 1, **dadurch gekennzeichnet, dass** die zweite Oberfläche (32) des Körpers (26) ebenfalls eine Reihe von umlaufenden Umfangsnuten (28) hat, die mit den umlaufenden Umfangsnuten (36) an der Trommel (34) fluchten, worin sich die Auslassenden (28b) der Extrusionsbohrungen (28) befinden.

3. Die Maschine gemäß Anspruch 1 oder 2, **dadurch gekennzeichnet**, indem Kanäle (39) zwischen den Umfangsnuten (36) der Trommel (34) und dem Körper (26) bestimmt sind, die gleich stromaufwärts der Auslassenden (28b) der Extrusionsbohrungen (28) in Bezug zur Drehrichtung der Trommel (34) durch entsprechende Einsätze (40) blockiert sind, die integral mit dem Körper (26) sind.

4. Die Maschine gemäß Anspruch 3, **dadurch gekennzeichnet, dass** jeder der Einsätze (40) ein Führungsende (42) hat, das dem Auslassende (28b) der jeweiligen Extrusionsbohrung (28) schräg zugewandt ist, um das Material, das aus der Bohrung austritt, in Drehrichtung der Trommel (34) zu lenken.

5. Die Maschine gemäß einem beliebigen der Ansprüche 1 bis 4, **dadurch gekennzeichnet, dass** der Körper (26) durch einen Sperrmechanismus (50) vorgespannt ist, um an die Trommel (34) anzustoßen, die sich in gleitendem Verhältnis mit Bezug auf den Körper dreht.

6. Die Maschine gemäß Anspruch 5, **dadurch gekennzeichnet, dass** der Sperrmechanismus (50) einen Träger (52) umfasst, der am Körper (26) befestigt ist und eine Gewindebohrung (54) hat, in die eine Schraube (56) eingreift, welche frontal an ein Widerlager (62) anstößt, das integral mit der Passage (14) ist.

7. Die Maschine gemäß einem beliebigen der Ansprüche 1 bis 6, **dadurch gekennzeichnet, dass** die zweite Oberfläche (32) des Körpers (26) eine Winkelerstreckung hat, die ausreicht, um die Pasta-Filata, die durch die Extrusionsbohrungen (28) extrudiert wird, aufzunehmen, bis die Pasta-Filata im Wesentlichen aufgehört hat, zu wachsen.

8. Die Maschine gemäß einem beliebigen der Ansprüche 2 bis 7, **dadurch gekennzeichnet, dass** die Umfangsnuten (36) an der Trommel (34) und die Umfangsnuten (38) am Körper (26) entgegengesetzte, halbkreisförmige Profile haben.

9. Die Maschine gemäß einem beliebigen der Ansprüche 1 bis 8, **dadurch gekennzeichnet, dass** sie Schneidemittel (46, 48) umfasst, die ausgebildet sind, um die von der Trommel (34) zugeführte Pasta-Filata in Streifen mit vordefinierter Länge zu schneiden.

10. Die Maschine gemäß Anspruch 9, **dadurch gekennzeichnet, dass** die Schneidemittel eine Klinge (46) umfassen, angeordnet in rechten Winkeln zur Zuführrichtung der von der Trommel (34) zugeführten Pasta-Filata und intermittierend von einem Aktuator (48) angetrieben, der gesteuert ist, um alle n Rotationsgrade der Trommel (34) einen Schnitt durchzuführen, worin n anhand der gewünschten Länge für die Streifen gewählt wird.

## Revendications

1. Machine de moulage de pâtes alimentaires, qui comprend un conduit (14) muni d'une sortie (22) qui possède une tête de moulage (24) appliquée dessus, et un moyen de poussée (20a, 20b) capable de pousser une masse de pâte chargée dans le conduit (14) vers ladite sortie (22),
dans laquelle ladite tête de moulage (24) comprend
- un tambour cylindrique (34) qui est supporté à l'horizontale en face de ladite sortie (22), est entraîné afin de tourner axialement à l'aide d'un moyen d'entraînement (M), et possède une série de rainures circonférentielles (36) sur sa surface extérieure, et
- un corps (26), qui est interposé entre ladite sortie (22) et ledit tambour (34), et est muni d'une série de trous d'extrusion (28) qui s'étendent entre une première surface (30) du corps, qui est prévue pour fermer ladite sortie (22), et une seconde surface (32) du corps, qui possède un profil concave en forme de secteur de cylindre d'un diamètre égal audit tambour (34), et est placée de manière adjacente à ce dernier,
lesdits trous d'extrusion (28) ayant des extrémités de sortie respectives (28b) qui s'ouvrent vers ladite seconde surface (32) et alignées avec lesdites rainures circonférentielles (36) sur le tambour (34), moyennant quoi la pâte extrudée par les trous d'extrusion (28) est fournie auxdites rainures circonférentielles (36) et est supportée par le tambour (34) pendant une partie de sa rotation, afin de recevoir une action de moulage déterminée par les profilés opposés du corps (26) et du tambour (34).

2. Machine selon la revendication 1, **caractérisée en ce que** ladite seconde surface (32) du corps (26) possède également une série de rainures circonférentielles (28) alignées avec les rainures circonférentielles (36) qui se trouvent sur ledit tambour (34), dans lesquelles se trouvent lesdites extrémités de sortie (28b) des trous d'extrusion (28).

3. Machine selon la revendication 1 ou 2, **caractérisée en ce que** des canaux (39) sont définis entre les rainures circonférentielles (36) du tambour (34) et du corps (26), qui sont obstrués, immédiatement en amont desdites extrémités de sortie (28b) des trous d'extrusion (28) par rapport au sens de rotation du tambour (34), par des inserts respectifs (40) qui font partie intégrante du corps (26).

4. Machine selon la revendication 3, **caractérisée en ce que** chacun desdits inserts (40) possède une extrémité de guidage (42) qui est tournée à l'oblique vers l'extrémité de sortie (28b) du trou d'extrusion respectif (28) afin d'acheminer la matière qui sort du trou dans le sens de rotation du tambour (34).

5. Machine selon l'une quelconque des revendications 1 à 4, **caractérisée en ce que** ledit corps (26) est sollicité afin de buter contre le tambour (34), qui tourne de manière coulissante par rapport au corps, à l'aide d'un mécanisme de blocage (50).

6. Machine selon la revendication 5, **caractérisée en ce que** ledit mécanisme de blocage (50) comprend un support (52) fixé sur le corps (26) et qui possède un trou fileté (54) qui est engagé par une vis (56) qui bute frontalement contre une butée (62) qui fait partie intégrante dudit conduit (14).

7. Machine selon l'une quelconque des revendications 1 à 6, **caractérisée en ce que** ladite seconde surface (32) du corps (26) possède une étendue angulaire, qui suffit pour contenir la pâte extrudée par lesdits trous d'extrusion (28) jusqu'à ce que la pâte arrête sensiblement de se développer.

8. Machine selon l'une quelconque des revendications 2 à 7, **caractérisée en ce que** lesdites rainures circonférentielles (36) qui se trouvent sur le tambour (34) et lesdites rainures circonférentielles (38) qui se trouvent sur le corps (26) possèdent des profils semi-circulaires opposés.

9. Machine selon l'une quelconque des revendications 1 à 8, **caractérisée en ce qu'**elle comprend un moyen de découpe (46, 48) adapté pour découper la pâte délivrée par le tambour (34) en bâtonnets qui possèdent une longueur prédéterminée.

10. Machine selon la revendication 9, **caractérisée en ce que** ledit moyen de découpe comprend une lame (46) prévue à des angles droits par rapport au sens d'alimentation de la pâte délivrée par le tambour (34), et entraînée par intermittence par un actionneur (48) commandé afin d'effectuer une découpe tous les *n* degrés de rotation du tambour (34), *n* étant choisi sur la base de la longueur souhaitée pour les bâtonnets.
